# EUROPEAN PATENT SPECIFICATION

(11) **EP 1 531 285 B1**
(45) Date of publication and mention of the grant of the patent: **04.10.2006**
(21) Application number: 03025970.9
(22) Date of filing: 13.11.2003
(51) Int. Cl.: F16H 3/093

(54) **Motor vehicle gearbox**
Kraftfahrzeuggetriebe
Boîte de vitesses pour véhicule motorisé

(43) Date of publication of application: 18.05.2005
(73) Proprietor: Ford Global Technologies, LLC., Dearborn MI 48126 (US)
(72) Inventor: Enström, Hans, 443 31 Lerum (SE)
(74) Representative: Hellbom, Lars Olof

(56) References cited:
- DE-A- 19 524 233
- FR-A- 2 819 873
- US-A- 4 738 149
- US-A- 5 715 727

## Description

The present invention relates to a motor vehicle gearbox, comprising a housing with input shaft means and two countershafts lying in a plane offset from said input shaft means and having gears wheels in engagement with gear wheels on said input shaft means, at least one gear wheel of each pair of mutually engaging gear wheels on said input shaft means and said countershafts being disengageable from its shaft, one of said disengageable gear wheels being mounted on one countershaft engaging an additional gear wheel, which is disengagebly carried on a fourth shaft, each of said countershafts and said fourth shaft having a gear wheel non-rotatably joined to its shaft and for transferring torque to output means, e.g. a crown wheel of a differential.

A gearbox of the above described type is known, e. g. by US 5 715 727. It has five or six forward speeds and one in reverse. Torque in reverse is transferred from the input shaft via a first speed disengageable gear wheel on one of the countershafts to a reverse speed gear wheel on the fourth shaft. A five speed gear box of this type can be made axially shorter than another known type of five speed gearbox with two countershafts wherein torque is transferred in reverse from the input shaft via one of the countershafts to the other countershaft. Alternatively, a six speed gearbox of the above described type can be as short as a five speed gearbox which, instead of a fourth shaft for reverse, uses one of the countershafts to reverse the direction of rotation of the other countershaft.

One object of the present invention, starting from the above described gearbox, is to achieve a gearbox which, without reducing the number of forward gear speeds, can be made even shorter.

Another object of the invention, starting from the above described gearbox, is to a achieve a gearbox having a layout particularly adapted for a so called power shift gearbox having two input shafts one of which is a hollow shaft journalled concentrically about the other input shaft.

This is achieved according to the invention by virtue of the fact that said input shaft means carries at least one gear wheel less than the number of forward gear speeds of the gearbox and that at least one disengageable gear wheel on at least one of the countershafts is arranged, when locked to the countershaft, to transfer torque from the countershaft to the output means with one forward speed and, when disengaged from the countershaft, to transfer torque via a transfer shaft and at least one further disengageable gear wheel on the fourth shaft to the output means with another forward gear speed.

In a previously known six speed gearbox of the above described type one of the countershafts carries the gear wheels transferring torque in 1^{st}, 3^{rd}, 5^{th} and 6^{th} gear speeds. This countershaft is the longest shaft of the gearbox and determines the maximum axial dimension of the gearbox housing. By removing one of these gear wheels and consequently also its counterpart on the input shaft means the axial dimensions of the gearbox housing can be reduced.

In a motor vehicle with a power shift gearbox having input shaft means comprising two concentrically joumalled input shafts, each one being connectable to the crankshaft of the engine by means of a clutch of its own, shifting from one gear speed to the next gear speed is performed by first preselecting next gear speed, then disengaging the clutch of the present gear speed and finally engaging the clutch of the next gear speed. This means that the gear wheels tranferring torque in gear speeds with uneven numbers must be mounted on one countershaft and gear wheels tranferring torque in gear speeds with even numbers on the other countershaft.

In a preferred embodiment of a power shift gearbox according to the present invention that disengageable gear on one of the countershafts which, when locked to the countershaft, transfers torque in 3^{rd} gear, is arranged, when disengaged from the countershaft, to tranfer torque in 1^{st} gear via the transfer shaft to a disengageable 1^{st} gear speed gear wheel on the fourth shaft. This means that, compared with the above described previously known gearbox, a pair of mutually engaging gear wheels on one of the input shafts and countershafts can be omitted.

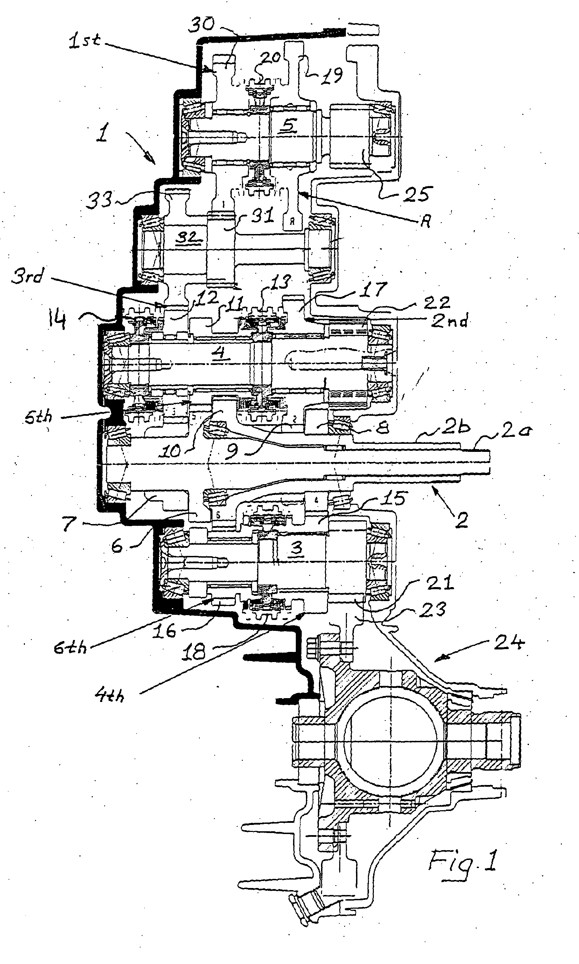

The invention will be described in more detail below with reference to examples shown in the accompanying drawings, where
Fig. 1 shows a longitudinal section through one embodiment of a six speed gearbox according to the invention, and

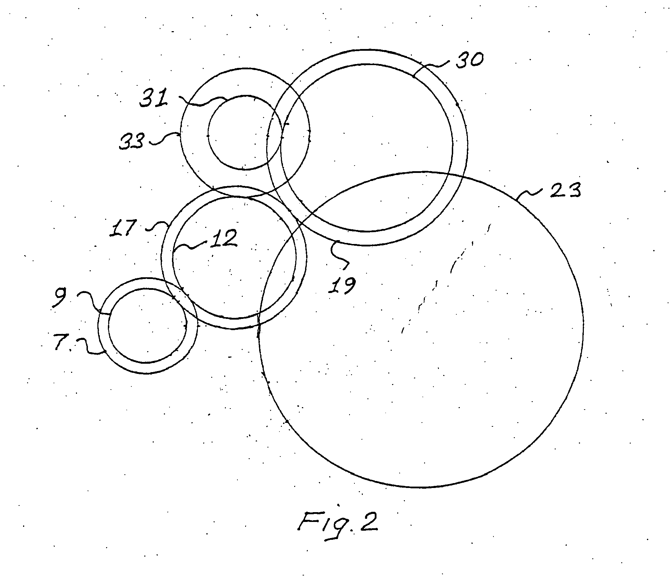

Fig. 2 shows a diagram of a layout of the shafts and gear wheels involved to tranfer torque in 1^{st} and 3^{rd} gear and reverse.

In a gearbox housing generally designated 1 an input shaft means 2 comprising two concentric input shafts 2a and 2b, a first countershaft 3, a second countershaft 4 and a reverse shaft 5 are rotatably mounted. Each input shaft 2a, 2b is adapted to be alternately connected to the crankshaft of an engine by means of a clutch (not shown) of its own. The input shaft 2a carries gear wheels 6 and 7 for 5^{th} and 3^{rd} gear speed, respectively, which are non-rotatably fixed to the shaft 2a while the input shaft 2b carries gear wheels 8, 9 and 10 for 4^{th}, 2^{nd} and 6^{th} gear speed, repectively, which are non-rotatably fixed to the shaft 2b.

The gear wheels 6 and 7 on the input shaft 2a engage gear wheels 11 and 12, respectively, which are rotatably journalled on the countershaft 4 but can be locked or released in a conventional manner by means of engaging sleeves 13 and 14, repectively, with associated synchronizing means. The gear wheels 8 and 10 on the input shaft 2b engage gear wheels 15 and 16 on the countershaft 3, respectively, while the gear wheel 9 on the input shaft 2b engages a gear wheel 17 on the countershaft 4. All gear wheels 15, 16 and 17 are rotatably journalled on their respective countershafts 3 and 4 but can be locked and released by means of an engaging sleeve 18 and the engaging sleeve 13, repectively. The gear wheel 17 on the countershaft 4 also engages a gear wheel 19 which is rotatably journalled and lockable to the reverse shaft 5 by means of an engaging sleeve 20 with associated synchronizing means.

A pair of gear wheels 21 and 22 are each non-rotatably fixed to its respective countershaft 3 and 4 and each engages a crown wheel 23 of a differential generally designated 24. A gear wheel 25 is non-rotatably fixed to the reverse shaft 5 and engages the crown wheel 23.

According to the invention also a gear wheel 30 for 1^{st} gear speed is rotatably journalled on the reverse shaft 5. This gear wheel 30 can be locked to the reverse shaft 5 by means of the engaging sleeve 20 and engages a gear wheel 31 which is non-rotatably mounted on a transfer shaft 32 journalled in the housing 1 between the countershaft 4 and the reverse shaft 5. A gear wheel 33 non-rotatably mounted on the transfer shaft 32 engages 3^{rd} gear speed gear wheel 12 on the countershaft 4.

In the described gearbox torque is tranferred in 3^{rd} and 5^{th} gear speeds from the input shaft 2a via the countershaft 4 and its non-rotatable gear wheel 22 to the crown wheel 23 and in 2^{nd}, 4^{th} and 6^{th} gear speeds from the input shaft 2b via the countershaft 3 and its non-rotatable gear wheel 21 to the crown wheel 23. Which gear engage in respective gear speeds is evident from the figures and only the torque tranfer in 1^{st}, 2^{nd}, 3^{rd} and reverse gear speeds will be described in detail.

In 1^{st} gear speed the gear wheel 30 is locked on the reverse shaft 5 by means of the engaging sleeve 20 and the rest of the disengageable gear wheels are disengaged. The clutch (not shown) of the input shaft 2a is engaged while the clutch (not shown) of the input shaft 2b is disengaged. Torque is now transferred from the driven input shaft 2a and the gear wheel 7 via 3^{rd} gear speed gear wheel 12, which now serves as an idler, and the gear wheels 33 and 31 on the transfer shaft 32 to the 1^{st} gear speed gear wheel 30. Since the gear wheel 12 will rotate the gear wheel 33 and with it the transfer shaft 32 in a direction opposite the direction of rotation of the gear wheel 12 the gear wheel 31 on the transfer shaft 32 will rotate the 1^{st} gear speed gear wheel 30 and with it the reverse shaft 5 in the same direction as the 3^{rd} gear speed gear wheel 12, thereby transferring torque in 1^{st} forward gear speed via the non-rotatable gear wheel 25 to the crown wheel 24.

When shifting from 1^{st} to 2^{nd} gear speed the 2^{nd} gear speed gear 17 is locked on the countershaft 4 by means of the engaging sleeve 13. After disengagement of the clutch of the input shaft 2a the clutch of the input shaft 2b is engaged to transfer torque via the non-rotatable gear wheel 22 on the countershaft 4 to the crown wheel 23.

When shifting from 2^{nd} to 3^{rd} gear speed the gear wheel 12 is locked on the countershaft 4 by means of the engaging sleeve 14 while the rest of the disengageable gear wheel are disengaged. The clutch of the input shaft 2b is disengaged and the clutch of the input shaft 2a is engaged. Torque is now tranferred from the input shaft gear wheel 7 via the gear wheel 12 and the non-rotatable gear wheel 22 on the countershaft 4 to the crown wheel 23.

In reverse the gear wheel 19 on the reverse shaft 5 is locked on the shaft by means of the engaging sleeve 20 while the rest of the disengageable gear wheels are disengaged. The clutch of the input shaft 2a is disengaged and the clutch of the input shaft 2b is engaged. Torque is now transferred from the 2^{nd} gear speed gear wheel 9 on the input shaft 2b via the disengaged 2^{nd} gear speed gear wheel 17 on the countershaft 4, the reverse gear speed gear wheel 19 and the non-rotatable gear wheel 25 on the reverse shaft to the crown wheel 23. By using the gear wheel 17 as an idler engaging the reverse gear wheel 19 on the reverse shaft 5 a reverse gear speed is obtained.

The purpose of using the 2^{nd} gear speed gear wheels also for reverse is, firstly, to obtain as high a gear ratio as possible in reverse and, secondly, to enable power shifting, i. e. shifting with practically no interruption of driving power, also between 1^{st} gear and reverse, since input shaft 2a provides driving power in 1^{st} gear and input shaft 2b in reverse.

The maximum axial dimension of a previously known six speed gearbox of the type described in the introduction above can, when modified according to the invention, be reduced at least 10%.

## Claims

1. Motor vehicle gearbox, comprising a housing (1) with input shaft means (2) and two countershafts (3,4) lying in a plane offset from said input shaft means and having gears wheels (11, 12, 15-17) in engagement with gear wheels (6-10) on said input shaft means, at least one gear wheel of each pair of mutually engaging gear wheels on said input shaft means and said countershafts being disengageable from its shaft, one (17) of said disengageable gear wheels being mounted on one countershaft (4) engaging an additional gear wheel (19), which is disengagebly carried on a fourth shaft (5), each of said countershafts and said fourth shaft having a gear wheel (21, 22, 25) non-rotatably joined to its shaft for transferring torque to output means (23), **characterized in that** said input shaft means (2) carries at least one gear wheel less than the number of forward gear speeds of the gearbox and that at least one disengageble gear wheel (12) on at least one (4) of the countershafts (3, 4) is arranged, when locked to the countershaft, to transfer torque from the countershaft to the output means (23) with one forward gear speed and, when disengaged from the countershaft, to transfer torque via a transfer shaft (32) and at least one further disengageable gear wheel (30) on the fourth shaft to the output means with another forward gear speed.

2. Gearbox according to claim 1, **characterized in that** said output means is a crown wheel (23) of a differential engaging said gear wheels (21,22,25), non-rotatably joined to the countershafts (3,4) and the fourth shaft (5).

3. Gearbox according to claim 1 or 2, **characterized in that** the gearbox has six forward gear speeds and that said at least one disengageable gear wheel (12) on said at least one countershaft (4) is arranged to transmit torque with a first and a third forward gear speed.

4. Gearbox according to claim 3, **characterized in that** said disengageable gear wheel (12) arranged to tranfer torque with the first and the third gear speeds engages a first gear wheel (33) non-rotatably mounted on said tranfer shaft (32) and that a second gear wheel (31) non-rotatably mounted on the transfer shaft engages said at least one further disengageable gear wheel (30) on the fourth shaft (5) which, when locked to the fourth shaft, is arranged to transfer torque to the crown wheel (23) with the first forward gear speed.

5. Gearbox according to one of claim 1-4, **characterized in that** the input shaft means (2) comprises a first and a second input shaft (2a, 2b), the second input shaft (2b) being a hollow shaft journalled concentric about the first input shaft (2a).

6. Gearbox according to claim 5, **characterized in that** the first input shaft (2a) carries two gear wheels (6, 7) arranged to transfer torque with the first, third and fifth forward gear speeds while the second input shaft (2b) carries three gear wheels (8, 9, 10) arranged to tranfer torque with the second, fourth and the sixth forward gear speeds and reverse.

7. Gearbox according to claim 6, **characterized in that** the gear wheels on the input shafts (2a, 2b) are non-rotatably joined to their respective input shafts.

## Patentansprüche

1. Kraftfahrzeuggetriebe umfassend ein Gehäuse (1) mit Eingangswellenmittel (2) und zwei Gegenwellen (3,4) liegend in einer Ebene versetzt von genanntem Eingangswellenmittel und habend Zahnräder (11, 12, 15 -17) in Eingriff mit Zahnrädern (6-10) auf genanntem Eingangswellenmittel, mindestens ein Zahnrad von jedem Paar von ineinander eingreifenden Zahnrädern auf genanntem Eingangswellenmittel und genannten Gegenwellen seiend trennbar von seiner Welle, eines (17) der genannten trennbaren Zahnräder seiend befestigt auf einer Gegenwelle (4) eingreifend in ein weiteres Zahnrad (19), welches trennbar auf einer vierten Welle (5) getragen wird, jede der genannten Gegenwellen und genannte vierte Welle habend ein Zahnrad (21, 22, 25) nicht-drehbar verbunden mit seiner Welle zur Drehmomentübertragung an ein Ausgangsmittel (23), **dadurch gekennzeichnet, dass** genanntes Eingangswellenmittel (2) mindestens ein Zahnrad weniger trägt als die Anzahl der Vorwärtsgänge des Getriebes und dass mindestens ein trennbares Zahnrad (12) auf mindestens einer (4) der Gegenwellen (3,4) eingerichtet ist, wenn eingerastet zu der Gegenwelle, zu übertragen Drehmoment von der Gegenwelle zu dem Ausgangsmittel (23) mit einem Vorwärtsgang und, wenn getrennt von der Gegenwelle, zu übertragen Drehmoment über eine Übertragungswelle (32) und mindestens ein weiteres trennbares Zahnrad (30) auf der vierten Welle zu dem Ausgangsmittel mit einem anderen Vorwärtsgang.

2. Getriebe nach Anspruch 1, **dadurch gekennzeichnet, dass** genanntes Ausgangsmittel ist ein Antriebskegelrad (23) eines Differentials eingreifend in genannte Zahnräder (21,22,25), nicht-drehbar verbunden mit den Gegenwellen (3,4) und der vierten Welle (5).

3. Getriebe nach Anspruch 1 oder 2, **dadurch gekennzeichnet, dass** das Getriebe sechs Vorwärtsgänge hat und dass genanntes mindestens ein trennbares Zahnrad (12) auf genannter mindestens einer Gegenwelle (4) ist eingerichtet, zu übertragen Drehmoment mit einem ersten und einem dritten Vorwärtsgang.

4. Getriebe nach Anspruch 3, **dadurch gekennzeichnet, dass** genanntes trennbares Zahnrad (12) eingerichtet zu übertragen Drehmoment mit den ersten und den dritten Gängen greift ein in ein erstes Zahnrad (33) nicht-drehbar befestigt auf genannter Übertragungswelle (32) und dass ein zweites Zahnrad (31) nicht-drehbar befestigt auf der Übertragungswelle greift ein in genanntes mindestens ein weiteres trennbares Zahnrad (30) auf der vierten Welle (5), welches, wenn eingerastet zu der vierten Welle, ist eingerichtet, zu übertragen Drehmoment zu dem Antriebskegelrad (23) mit dem ersten Vorwärtsgang.

5. Getriebe nach einem der Ansprüche 1 bis 4, **dadurch gekennzeichnet, dass** das Eingangswellenmittel (2) umfasst eine erste und eine zweite Eingangswelle (2a,2b), die zweite Eingangswelle (2b) seiend eine Hohlwelle konzentrisch angeordnet um die erste Eingangswelle (2a).

6. Getriebe nach Anspruch 5, **dadurch gekennzeichnet, dass** die erste Eingangswelle (2a) zwei Zahnräder (6,7) trägt eingerichtet zu übertragen Drehmoment mit den ersten, dritten und fünften Vorwärtsgängen während die zweite Eingangswelle (2b) trägt drei Zahnräder (8,9,10) eingerichtet, zu übertragen Drehmoment mit den zweiten, vierten und sechsten Vorwärtsgängen and rückwärts.

7. Getriebe nach Anspruch 6, **dadurch gekennzeichnet, dass** die Zahnräder auf den Eingangswellen (2a,2b) sind nicht-drehbar verbunden mit ihren jeweiligen Eingangswellen.

## Revendications

1. Une boîte de vitesses de véhicule motorisé, comportant un carter (1) avec un moyen d'arbre d'entrée (2) et deux arbres intermédiaires (3, 4) s'étalant en un plan décalé par rapport audit moyen d'arbre d'entrée et ayant des roues dentées (11, 12, 15-17) en engrènement avec des roues dentées (6-10) sur ledit moyen d'arbre d'entrée, au moins une roue dentée de chaque paire de roues dentées s'engrenant mutuellement sur ledit moyen d'arbre d'entrée et sur lesdits arbres intermédiaires étant débrayable de son arbre, l'une (17) desdites roues dentées débrayables, étant montée sur un arbre intermédiaire (4) s'engrenant avec une roue dentée additionnelle (19), laquelle est portée de manière débrayable sur un quatrième arbre (5), chacun desdits arbres intermédiaires et ledit quatrième arbre ayant une roue dentée (21, 22, 25) reliée de manière non rotative à son arbre pour transférer un couple au moyen de sortie (23), **caractérisée en ce que** ledit moyen d'arbre d'entrée (2) porte au moins une roue dentée de moins que le nombre de vitesses de marche avant de la boîte de vitesses et **en ce qu'**au moins une roue dentée débrayable (12) sur au moins l'un (4) des arbres intermédiaires (3, 4) est adaptée, lorsqu'elle est verrouillée sur l'arbre intermédiaire, pour transférer un couple à partir de l'arbre intermédiaire vers le moyen de sortie (23) avec une vitesse de marche avant et, lorsqu'elle est débrayée de l'arbre intermédiaire, pour transférer un couple via un arbre de transfert (32) et au moins une roue dentée débrayable supplémentaire (30) sur le quatrième arbre vers le moyen de sortie avec une autre vitesse de marche avant.

2. Une boîte de vitesses selon la revendication 1, **caractérisée en ce que** ledit moyen de sortie est une grande couronne (23) d'un différentiel s'engrenant avec lesdites roues dentées (21, 22, 25), reliée de manière non rotative aux arbres intermédiaires (3, 4) et au quatrième arbre (5).

3. Une boîte de vitesses selon la revendication 1 ou 2, **caractérisée en ce que** la boîte de vitesses présente six vitesses de marche avant et **en ce que** ladite au moins roue dentée débrayable (12) sur ledit au moins arbre intermédiaire (4) est adaptée pour transmettre un couple avec une première et une troisième vitesse de marche avant.

4. Une boîte de vitesses selon la revendication 3, **caractérisée en ce que** ladite roue dentée débrayable (12) adaptée pour transférer un couple avec la première et la troisième vitesse s'engrène avec une première roue dentée (33) montée de manière non rotative sur ledit arbre de transfert (32) et **en ce qu'**une deuxième roue dentée (31) montée de manière non rotative sur l'arbre de transfert s'engrène avec ladite au moins roue dentée débrayable, supplémentaire (30) sur le quatrième arbre (5) laquelle, lorsqu'elle est verrouillée sur le quatrième arbre, est adaptée pour transférer un couple à la grande couronne (23) avec la vitesse de marche avant.

5. Une boîte de vitesses selon l'une quelconque des revendications 1-4, **caractérisée en ce que** le moyen d'arbre d'entrée (2) comporte un premier et un deuxième arbre d'entrée (2a, 2b), le deuxième arbre d'entrée (2b) étant un arbre creux monté comme un tourillon concentrique autour du premier arbre d'entrée (2a).

6. Une boîte de vitesses selon la revendication 5, **caractérisée en ce que** le premier arbre d'entrée (2a) porte deux roues dentées (6, 7) adaptées pour transférer un couple avec les première, troisième et cinquième vitesses de marche avant tandis que le deuxième arbre d'entrée (2b) porte trois roues dentées (8, 9, 10) adaptées pour transférer un couple avec les deuxième, quatrième et sixième vitesses de marche avant et la marche arrière.

7. Une boîte de vitesses selon la revendication 6, **caractérisée en ce que** les roues dentées sur les arbres d'entrée (2a, 2b) sont reliées de manière non rotative sur leur arbre d'entrée respectif.
